# EUROPEAN PATENT APPLICATION

(11) **EP 1 721 876 A1**
(43) Date of publication of application: **15.11.2006**
(21) Application number: 05103802.4
(22) Date of filing: 09.05.2005
(51) Int. Cl.: C04B 28/26, C04B 28/00, C04B 7/32, C04B 14/10, C04B 18/08, C04B 22/06

(54) **Process for the preparation of self-levelling mortar and binder used in it**

(71) Applicant: SIKA, S.A., Madrid, 28108 (ES)
(72) Inventor: Granizo Fernandez, Luz, c/o Sika, S.A., 28108, Madrid (ES); Gonzales Rodriguez, Tomás, c/o Sika, S.A., 28108, Madrid (ES); Rico Hernandez, Roberto, c/o Sika, S.A., 28108, Madrid (ES)
(74) Representative: Elzaburu Marquez, Alberto

(57) **Abstract**

The invention relates to a process for the preparation of a self-levelling mortar, and to the binder used in it. In this process, a solid component that comprises an alkali-activated cementing material containing 10-20% of silica and alumina, 1-10% of a calcium aluminate cement or a white cement and fine aggregate is mixed together, with agitation, with a liquid component that comprises a 30-50% solution of sodium hydroxide, as well as sodium silicate, where the SiO₂ content is less than 30% and the Na₂O content is less than 20%, the ratio between the liquid and the solid component being in the range 0.10-0.30 by weight. The binder comprises the said cementing material and calcium aluminate cement or white cement in the indicated amounts.

## Description

### Field of the invention

The present invention relates to a process for the preparation of a self-levelling mortar, and especially to a process based on the alkaline activation of a cementing material and aluminous cement, as well as to the cementing material (binder) itself.

### Background of the invention

The introduction of Portland cement over a hundred years ago revolutionized construction work and brought numerous advantages and improvements in this field. Portland cement is relatively cheap, and its characteristics are highly suitable for a large number of applications, including the preparation of self-levelling mortar.

Alternative binders to conventional Portland cement have also been known for some time, such as:
- belite cements
- mineralized cements, and
- alkali-activated cements.

Alkaline cements can be further divided into a first group that includes geo-cements and in a second group that includes:
- activated-slag cements
- activated-ash cements
- Portland cement, and
- alkaline aluminate cements.

Interest in cementing materials has recently centred on the study and development of systems based on minerals of the type of C₃S, C₂S, C₃A and C₄AF, which form the clinker of Portland cement.

Various investigations carried out on concrete both in the past and in modern times indicate that the binding properties of antique cements were based on the formation of hydrated calcium aluminosilicates [see R. Malinowski: "Concretes and mortars in ancient aqueducts", Concrete Intern. (1979), vol. 1 pp. 66-76]. At the same time, crystalline phases of the analcime type also occurred in antique concretes.

Professor V.D. Glukhovsky of the Kiev Civil Engineering Institute was the first to suggest and demonstrate that cementing materials can be prepared by the suitable treatment of aluminosilicates of alkali metals and alkaline earth metals.

These binding agents score over Portland cement in that e.g. they set faster, have a greater mechanical strength, are more impermeable to water, withstand freeze/thaw cycles better, and are more resistant to high temperatures and chemical attack. Their disadvantages include a greater shrinkage and the formation of cracks.

Cementing materials based on alkaline activation are described in the following patent publications:
- US Patent No. 4,349,386 of 1982 by J. Davidovits, entitled "Mineral polymers and methods of making them"
- US Patent No. 4,509,985 of 1985 by J. Davidovits et al., entitled "Early high-strength mineral polymer"
- International Patent PCT/US No. 96/01928 by Drexel University and ByProducts Development Co. entitled "Fly-ash cementitious material"
- European Patent EP 0,500,845 B1 of 1992 by J. Davidovits, entitled "Method for obtaining a geo-polymer binder allowing to stabilize, solidify and consolidate toxic or waste materials", and
- International Patent PCT/AT No. 97/00256 of 1997 by Holderbank Financiere Glarus A.G., entitled "Cement composition".

Alkali-activated cement is essentially a new type of cementing material, in which the alkaline components act as structure-forming elements. Depending on the composition of the starting materials, the cementing system of this type belongs to two groups, namely binder systems containing alkali metals (Me₂O - Me₂O₃ - SiO₂ - H₂O) and systems containing both alkali metals and alkaline earth metals (Me₂O - MeO - Me₂O₃ - SiO₂ - H₂O).

These cementing systems are similar to some natural minerals (e.g. hydronepheline, analcime, natrolite and hydroxysodalite), produced during hardening with carbonates and calcium hydrosilicates.

Cementing materials of this type contain a large amount of alkaline substances namely 3-20 wt-%, calculated as Na₂O, and their binding properties are determined by the oxides in them.

According to Krivenko, the general mechanism of alkaline activation can be considered to lie in a set of destruction and condensation reactions, including the destruction of the initial solid into unstable structural units, their interaction with coagulated structures, and the formation of condensed and crystallized structures [see V.D. Glukhovsky, G.S. Rostovskaya and G.V. Rumyna, Seventh Internat. Congr. of Chem. Cem. (Paris, 1989), 3 v., pp. 164-168].

According to this view, the covalent Si-O-Si and Al-O-Si bonds are assumed to break in the first step. This occurs when the ionic force of the medium is changed by the addition of electron donor ions (alkali metal ions), which raise the pH of the medium. The role of the alkali metal ions is then to accelerate the reaction by maintaining the ionic force of the medium at a value needed for the destruction of the covalent bonds and the conversion of these groups into a colloidal phase.

The second step is assumed to consist in the accumulation of the degraded products, which includes a series of contacts and interactions, with the formation of a coagulated structure giving rise to polycondensation processes. The rate of condensation is determined by the state of the ions in the coagulated structure and by the conditions of gel formation.

The structure is then condensed in the third step. The composition of the resulting products depends on the chemical and mineralogical composition of the initial phase, the nature of the alkaline component, and the conditions of curing.

Other unstable phases will in time turn into stable products like micas and zeolites.

The cementing materials based on alkaline activation in systems containing both alkali metals and alkaline earth metals have been marketed in the USA following investigations carried out on aluminosilicate-type inorganic polymers.

Geo-polymer cements are formed by a polycondensation reaction, called geo-polymerization, which involves the formation of a zeolite-type three-dimensional structure.

Geo-polymer binders set quickly at ambient temperatures and develop a compression strength of the order of 20 MPa after 4 hours at 20°C. The behaviour of geo-polymer cements is similar to that of zeolites and feldspathoids.

However, no one seems to have suggested so far the use of alkali-activated materials for the preparation of self-levelling mortar for paving purposes and other applications, which forms the subject of the present invention.

### Summary of the invention

The aim of the present invention is to provide a process for the preparation of a self-levelling mortar by using a binder formed by a mixture of the following components:
- 10-20% of an alkali-activated cementing material that contains silica and alumina and is preferably formed by a mixture of metakaolin and fly-ash.
- 1-10% of calcium aluminate cement (CAC) or white cement (BL |52,5).
- 56-75% of fine aggregate.

These materials are mixed with a liquid component that includes a 30-50% solution of sodium hydroxide in an amount of 30-50%, as well as sodium silicate, the SiO₂ content here being below 30% and the Na₂O content below 20%. The ratio between the liquid component and the solid component is 0.15-0.30 by weight.

The mortar can also contain additives that are normally used in Portland cement mortars, such as a de-aerating agent and an anti-shrinkage agent.

The mortar prepared by this process has the following advantages over a self-levelling mortar based on conventional Portland cement:
- higher abrasion resistance
- higher early compression strength
- higher resistance to chemical attack, and
- the emission of less CO₂ into the atmosphere (the figure being about 1 tons CO₂ per tons of cement produced in the case of Portland cement).

It has been found that these properties are due to the combined use of an alkali-activated material and a small amount of calcium aluminate cement or white cement. This last component obviously gives a mortar with a much lighter colour than that obtained with calcium aluminate cement.

Other characteristics and advantages of the present invention will emerge from the following detailed description.

### Detailed description of the invention

The description of the components of self-levelling mortar given in the previous section should be supplemented by the following information.

The CAC cement is a calcium aluminate cement.

BL I 52,5 is a white cement of type I 52.5.

The alkali-activated binder contains - besides silica and alumina - also metakaolin and/or fly-ash, as well as other clay minerals like kaolinite, illite, vermiculite, smectite, chlorite, China clay, allophane and imogolite, together with other aluminosilicates, especially those with an amorphous structure.

The term metakaolin is used here to denote a material that is obtained when kaolin is heated to eliminate its water of constitution. The OH groups in the kaolin structure react with one another to form water in accordance with the equation:

OH+OH→H₂O+O.

The elimination of a water molecule leaves behind a vacant site in the lattice and gives rise to a disordered phase, which is metakaolin.

Metakaolin can be activated with the aid of highly alkaline solutions, giving rise to a material that has a great mechanical strength.

Not only the characteristics of the starting metakaolin are important in the formation of this strong material but also a series of constitutional factors that modify the alkaline activation process, as well the physical properties of the starting mass, which influence the properties of the final paste-like mass.

Fly-ash is the solid residue collected either by electrostatic precipitation or by the mechanical capture of the powder that is formed along with combustion gases in thermoelectric power stations fired with powdered coal. Fly-ash consists of small spherical particles with a diameter that varies from 1 µ to 150 µ. It has a highly variable composition, and its silica content can range from 34% to 62%. Like metakaolin, fly-ash is used in the mortar according to the present invention as a source of silica and alumina.

The term fine aggregate denotes here a mixture of sand and gravel with the following particle sizes:
- sand with particles measuring 0.05-0.5 mm
- sand with particles measuring 0.1-0.7 mm
- Chinilla sand with particles measuring 0.6-1.0 mm
- fine China sand with particles measuring 1-2 mm
- medium-grade China sand with particles measuring 2-3 mm, and
- gravel with particles measuring 4-8 mm.

These solids are mixed with the liquid component mentioned above. Contact between them is ensured by slow mixing for about 3 minutes in a mechanical mixer. This is done until the required consistency is obtained, which should exceed 200 mm on a vibrating table according to UNE Standard No. 83-811-92 in order to ensure that the mortar obtained is self-levelling.

The reaction mechanism involved in the formation of the mortar according to the present invention is not well known, which is also the case with other materials formed by alkaline activation. It is believed, however, that the formation of a solid with cementing properties involves the condensation and crystallization of a coagulated initial structure that is formed when the solid component of the mortar is suspended in the alkaline liquid. This suspension gives rise to aluminosiliceous gels, which then gradually form crystalline structures that reach a high strength within 24-48 hours.

The following examples illustrate the self-levelling mortar according to the invention.

### Example 1

Composition of the solid component:
- 20% of metakaolin and fly-ash
- 68% of fine aggregate
- 10% of calcium aluminate cement, and
- 2% of other materials.

The solid component was mixed with a liquid component that contained 50% of a 50% solution of sodium hydroxide, giving a mortar with the characteristics shown below.

| **Test** | **Results** |
|---|---|
| Liquid/solid ratio by weight | 0.24 |
| Static consistency | 241 mm |
| Adhesion on day 7 | 8.7 MPa (cohesion of the product) |
| Adhesion on day 28 | 6.6 MPa (cohesion of the product) |
| One-day Flexural strength | 3.4 MPa |
| One-day compression strength | 18.1 MPa |
| Erosion index on day 28 | < 3% |
| Beginning of setting | 2:45 hours |
| End of setting | 4:30 hours |

### Example 2

Composition of the solid component:
- 20% of metakaolin and fly-ash
- 68% of fine aggregate
- 10% of calcium aluminate cement, and
- 2% of other materials.

The solid component was mixed with a liquid component that contained 30% of a 50% solution of sodium hydroxide, giving a mortar with the characteristics shown below.

| **Test** | **Results** |
|---|---|
| Liquid/solid ratio by weight | 0.23 |
| Static consistency | 237.5 mm |
| Three-day flexural strength | 3.6 MPa |
| Three-day compression strength | 20.8 MPa |
| Beginning of setting | 2:45 hours |
| End of setting | 8:45 hours |

### Example 3

Composition of the solid component:
- 14% of metakaolin and fly-ash
- 75% of fine aggregate
- 5% of calcium aluminate cement, and
- 6% of other materials.

The solid component was mixed with a liquid component that contained 50% of a 50% solution of sodium hydroxide, giving a mortar with the characteristics shown below.

| **Test** | **Results** |
|---|---|
| Liquid/solid ratio by weight | 0.23 |
| Static consistency | 210 mm |
| Adhesion on day 7 | 14.78 MPa |
| 24-hour flexural strength | 3.7 MPa |
| 24-hour compression strength | 21.4 MPa |
| Erosion index on day 7 | <2.80% |
| Beginning of setting | 2:20 hours |
| End of setting | 6:35 hours |

### Example 4

Composition of the solid component:
- 14% of metakaolin
- 75% of fine aggregate
- 5% of white cement BL I 52,2, and
- 4% of other materials.

The solid component was mixed with a liquid component according to the invention giving a mortar with the characteristics shown below.

| | **Static consistency (mm)** | **Cohesive adhesion of the product (MPa)** |
|---|---|---|
| | | 7 days |
| Result | ≅ 183*mm* | **10,3** |
| STANDARD USED | UNE 83-811-92 | |

| | **Compression strength (MPa)** |
|---|---|
| | 24 horas |
| Result | **34,8** |
| STANDARD USED | UNE 83-821-92 |

This composition gives a self-levelling mortar with a much lighter colour than that obtained with calcium aluminate cement.

As these examples show, the properties of the mortar vary with the components used within the indicated ranges. On average, the mortar can be considered to have the properties shown in Tables 1 and 2 below.

**Table 1**

| | **Static consistency (mm)** | **Cohesive adhesion of the product (MPa)** |
|---|---|---|
| | | 7 days |
| Result | ≅ 200 *mm* | **> 13** |
| STANDARD USED | UNE 83-811-92 | |

**Table 2**

| | **Compression strength (MPa)** | | | **Erosion index** | |
|---|---|---|---|---|---|
| | 1 day | 3 days | 28 days | 7 days | 28 days |
| Result | **>20** | **>30** | **>40** | **<3%** | **<3%** |
| STANDARD USED | UNE 83-821-92 | | | | |

It is of interest to mention here that the setting started within 4 hours and finished within 9 hours after mixing.

It can also be seen that the mortars obtained by the process according to the invention have a good adhesion to cement fibre and sprayed metal, as well as being highly resistant to chemical attack.

The characteristics of the mortar prepared according to the present invention are further illustrated in Table 3. These results are comparable to the results obtained for a self-levelling mortar based on conventional Portland cement with the following composition:
- 29.0% of I 52.5 cement + calcium aluminate cement
- 60.0% of fine aggregate
- 1.2% of plasticizer, and
- 9.8% of other additives.

**Table 3**

| | **Static consistency (mm)** | **Cohesive adhesion of the product (Mpa)** | | **strength (Mpa)** | | |
|---|---|---|---|---|---|---|
| | | 7 days | 28 days | 1 day | 7 days | 28 days |
| Result | ≅ 160 *mm* | 2,27 | 2,19 | 13 | 45 | 49 |
| STANDARD USED | UNE 83-811-92 | | | UNE 83-821-92 | | |

Both the amount of fly-ash and metakaolin and the amount of calcium aluminate cement have a great influence on the final properties of the resulting mortar. The following examples show that this applies to the beginning and end of the setting, the compression strength, the bending strength, as well as the liquid needed to obtain a self-levelling mortar.

### Example 5

A binder with the following composition gave a mortar with the properties shown in Tables 4 and 5:
- 19% of metakaolin
- 19% of fly-ash
- 0% of calcium aluminate cement,
- the rest being the same as in the case of the mortar according to the present invention.

**Table 4**

| | **Static consistency (mm)** | **Cohesive adhesion of the product (MPa)** | |
|---|---|---|---|
| | | 7 days | 28 days |
| Result | ≅ 256*mm* | **2,20** | **2,68** |
| STANDARD USED | UNE 83-811-92 | | |

**Table 5**

| | **Compression strength (MPa)** | | | **Erosion index** | |
|---|---|---|---|---|---|
| | 1 day | 7 days | 28 days | 7 days | 28 days |
| Result | **11** | | | **2,92** | **2,23** |
| STANDARD USED | UNE 83-821-92 | | | | |

The self-levelling mortar started to set after 7 hours, 40 minutes and only finished setting when more than 11 hours had elapsed after mixing. The mortar obtained showed cracks.

### Example 6

A binder with the following composition was prepared:
- 0% of metakaolin
- 30% of fly-ash
- 0% of calcium aluminate cement,
- the rest being the same as in the case of the mortar according to the present invention.

This gave a self-levelling mortar with a static consistency of 272 mm, but it still had not started to set 24 hours later.

The preferred embodiment described above may be modified within the scope defined in the following claims.

## Claims

1. Process for the preparation of a self-levelling mortar by mixing together and agitating an alkali-activated cementing material, a calcium aluminate cement or a white cement I 52,5, fine aggregate and a liquid component, **characterized in that**:
a) the alkali-activated cementing material contains silica and alumina and is used in an amount of 10-20%, calculated on the solids;
b) the amount of calcium aluminate cement or white cement I52,5 is 1-10%, calculated on the solids;
c) the amount of fine aggregate is 56-75%, calculated on the solids;
d) the liquid component contains a 30-50% solution of sodium hydroxide, as well as sodium silicate, the SiO₂ content being less than 30%, and the Na₂O content less than 20%; and
e) the ratio between the liquid component and the solids is 0.10-0.30 by weight.

2. Process for the preparation of a self-levelling mortar according to Claim 1, **characterized in that** the alkali-activated cementing material is a mixture of metakaolin and fly-ash.

3. Process for the preparation of a self-levelling mortar according to Claim 1, **characterized in that** the alkali-activated cementing material is a mixture of clay minerals like kaolinite, illite, vermiculite, smectite, chlorite, China clay, allophane and imogolite, together with other aluminosilicates, especially those with an amorphous structure.

4. Process for the preparation of a self-levelling mortar according to Claim 1 or 2 or 3, **characterized in that** the mixture is agitated until a consistency greater than 200 mm is obtained.

5. Binder for the preparation of self-levelling mortars, **characterized in that** it comprises:
a) an alkali-activated cementing material that contains silica and alumina, and is used in an amount of 10-20%, calculated on the solids in the mortar; and
b) calcium aluminate cement or white cement I52,5 in an amount of 1-10%, calculated on the solids in the mortar.

6. Binder for the preparation of self-levelling mortars according to Claim 5, **characterized in that** the alkali-activated cementing material is a mixture of metakaolin and fly-ash.

7. Binder for the preparation of self-levelling mortars according to Claim 5, **characterized in that** the alkali-activated cementing material is a mixture of clay minerals like kaolinite, illite, vermiculite, smectite, chlorite, China clay, allophane and imogolite, together with other aluminosilicates, especially those with an amorphous structure.
